# EUROPÄISCHE PATENTSCHRIFT

(11) **EP 4 111 055 B1**
(45) Veröffentlichungstag und Bekanntmachung des Hinweises auf die Patenterteilung: **19.02.2025**
(21) Anmeldenummer: 21705936.9
(22) Anmeldetag: 15.02.2021
(51) Int. Cl.: F03D 17/00

(54) **VERFAHREN ZUR ZUSTANDSÜBERWACHUNG EINES ANTRIEBSSTRANGS ODER TURMS EINER WINDENERGIEANLAGE UND WINDENERGIEANLAGE**
METHOD FOR MONITORING THE STATE OF THE POWERTRAIN OR TOWER OF A WIND TURBINE, AND WIND TURBINE
PROCÉDÉ POUR CONTRÔLER L'ÉTAT DE LA CHAÎNE CINÉMATIQUE OU DE LA TOUR D'UNE TURBINE ÉOLIENNE, ET TURBINE ÉOLIENNE

(30) Priorität: 26.02.2020 DE 102020105053
(43) Veröffentlichungstag der Anmeldung: 04.01.2023
(73) Patentinhaber: VC VIII Polytech Holding ApS, 6740 Bramming (DK)
(72) Erfinder: RIEGER, Florian, 80331 München (DE)
(74) Vertreter: Zacco Denmark A/S
(86) Internationale Anmeldenummer: PCT/EP2021/053602
(87) Internationale Veröffentlichungsnummer: WO 2021/170434

(56) Entgegenhaltungen:
- EP-A1- 2 565 444
- DE-A1- 102011 117 468
- DE-A1- 102013 223 294
- DE-U1- 202013 007 142

## Beschreibung

### TECHNISCHES GEBIET

Die vorliegende Offenbarung bezieht sich auf ein Verfahren zur Zustandsüberwachung eines Antriebsstrangs oder Turms einer Windenergieanlage sowie eine Windenergieanlage. Insbesondere bezieht sich die Erfindung auf eine Windenergieanlage und ein zugehöriges Verfahren, die beispielsweise Sensoren auf einer Struktur aufweist und ein Zustand einer anderen, mechanisch gekoppelten Struktur mit diesen Sensordaten überwacht werden kann.

### TECHNISCHER HINTERGRUND

Es ist bekannt, dass eine Erhebung von Daten von Windenergieanlage einem sinnvollen und sicheren Betrieb der Windenergieanlage bzw. eines Windparks förderlich ist. Ein Beispiel sind Daten zur Messung der Windgeschwindigkeit, die dafür genutzt werden, die Blattwinkelverstellung zu steuern oder, im Falle, dass die Windgeschwindigkeit zu hoch wird, den Rotor bzw. die Anlage abzuschalten, um die Anlage vor Beschädigung zu schützen.

Auf Windenergieanlage können Daten von einer Vielzahl an Sensoren erhoben werden. Generell erscheint es wünschenswert, möglichst viele Daten über eine Windenergieanlage zu erfassen, um so möglichst gute Aussagen über den Zustand der Windenergieanlage treffen zu können.

In der Praxis sind jedoch nur die wenigsten Windenenergieanlagen mit einem vollständigen Sensorsatz bestück. Somit weisen nicht alle Windenenergieanlagen Sensoren an allen relevanten Teilen auf. Zudem wäre es gegebenenfalls wünschenswert Redundanz zu schaffen.

Es ist daher erstrebenswert, Windenergieanlage und Windparks derart zu verbessern, dass ein Zustand von relevanten Teilen überwacht werden kann. Die Dokumente DE 10 2011 117468 A1 und DE 20 2013 007142 U1 offenbaren verschiedene für die Erfindung relevante Stand der Technik.

### ZUSAMMENFASSUNG

Ausführungsformen der vorliegenden Offenbarung stellen ein Verfahren zur Zustandsüberwachung eines Turms einer Windenergieanlage gemäß Anspruch 1 und eine Windenergieanlage gemäß Anspruch 7 bereit.

Gemäß einer Ausführungsform der vorliegenden Offenbarung wird ein Verfahren zur Zustandsüberwachung eines Turms einer Windenergieanlage bereitgestellt. Das Verfahren umfasst Erfassen von Daten eines Zustandsüberwachungssystems, wobei das Zustandsüberwachungssystem für eine Struktur der Windenergieanlage vorgesehen ist, die mit dem Antriebsstrang oder Turm mechanisch gekoppelt ist; Verarbeiten der erfassten Daten von dem Zustandsüberwachungssystem, das für die Struktur der Windenergieanlage vorgesehen ist, die mit dem Antriebsstrang oder Turm mechanisch gekoppelt ist; und Bestimmen eines Zustandes des Antriebsstrangs oder Turms aus den verarbeiteten Daten von dem Zustandsüberwachungssystem, das für die Struktur der Windenergieanlage vorgesehen ist, die mit dem Antriebsstrang oder Turm mechanisch gekoppelt ist.

Gemäß einer weiteren Ausführungsform der vorliegenden Offenbarung wird eine Windenergieanlage bereitgestellt. Die Windenergieanlage umfasst mindestens einen Antriebsstrang und einen Turm; ein Zustandsüberwachungssystem, wobei das Zustandsüberwachungssystem für eine Struktur der Windenergieanlage vorgesehen ist, die mit dem Antriebsstrang oder Turm mechanisch gekoppelt ist, und eine Datenverarbeitungsvorrichtung, die eingerichtet ist zum Ausführen eines Verfahrens zur Zustandsüberwachung eines Antriebsstrangs oder Turms einer Windenergieanlage. Das Verfahren umfasst Erfassen von Daten eines Zustandsüberwachungssystems, wobei das Zustandsüberwachungssystem für eine Struktur der Windenergieanlage vorgesehen ist, die mit dem Antriebsstrang oder Turm mechanisch gekoppelt ist; Verarbeiten der erfassten Daten von dem Zustandsüberwachungssystem, das für die Struktur der Windenergieanlage vorgesehen ist, die mit dem Antriebsstrang oder Turm mechanisch gekoppelt ist; und Bestimmen eines Zustandes des Antriebsstrangs oder Turms aus den verarbeiteten Daten von dem Zustandsüberwachungssystem, das für die Struktur der Windenergieanlage vorgesehen ist, die mit dem Antriebsstrang oder Turm mechanisch gekoppelt ist.

### KURZE BESCHREIBUNG DER ZEICHNUNGEN

Ausführungsformen der Erfindung sind in den Zeichnungen dargestellt und in der nachfolgenden Beschreibung näher erläutert. In den Zeichnungen zeigen:
- Fig. 1: eine beispielhafte Windenergieanlage gemäß Ausführungsformen;
- Fig. 2: einen Ausschnitt aus einer beispielhafte Windenergieanlage sowie ein Diagramm zur Darstellung von Eigenfrequenzbereichen gemäß Ausführungsformen; und
- Fig. 3: ein Ablaufdiagramm zur Illustration eines beispielhaften Verfahrens zur Zustandsüberwachung eines Antriebsstrangs oder Turms einer Windenergieanlage.

### BESCHREIBUNG VON AUSFÜHRUNGSFORMEN

Nachstehend werden Ausführungsformen der vorliegenden Offenbarung näher erläutert. Die Zeichnungen dienen der Veranschaulichung eines oder mehrerer Beispiele von Ausführungsformen. In den Zeichnungen bezeichnen gleiche Bezugszeichen die gleichen, oder ähnliche Merkmale der jeweiligen Ausführungsformen. Merkmale, die als Teil einer Ausführungsform beschrieben werden, können auch in Verbindung mit einer anderen Ausführungsform verwendet werden, und so eine weitere Ausführungsform bilden.

Hierin beschriebenen Ausführungsformen können den Zustand einer Struktur überwachen oder bestimmen, in dem sie Daten von einer Struktur erfassen, die mit dieser Struktur mechanisch gekoppelt ist. Hierin beschriebenen Ausführungsformen ermöglichen insbesondere die Zustandsüberwachung eines Antriebsstrangs oder Turms einer Windkraftanlage mittels eines Zustandsüberwachungssystems, das für einen mit dem Antriebsstrang oder Turm mechanisch gekoppelte Struktur verbunden ist. Dieses System ist insbesondere für Windenergieanlagen von Vorteil sein, die kein Überwachungssystem für den Antriebsstrang und/oder den Turm aufweisen und/oder eine Redundanz für diese geschaffen werden soll. Auch kann ein weiteres, zusätzliches Überwachungssystem gewünscht sein, dass beispielsweise eine höhere Datenrate und/oder Datentiefe aufweist, leicht zugänglich ist und/oder besser in das System der Windenergieanlage integriert ist.

Gemäß hierin beschriebener Ausführungsformen können beispielsweise die Vibrationen am Antriebsstrang oder Turm, anstatt diese Vibrationen direkt am Antriebsstrang oder Turm zu messen, auch indirekt im Rotor gemessen werden.

Insbesondere können an den Rotorblättern, oder an einer anderen mechanisch gekoppelten Struktur, gemessenen Eigenfrequenzen klassifiziert werden. Die an dieser Struktur gemessenen Eigenfrequenzen können in Blatteigenfrequenzen, Turmeigenfrequenzen, Antriebsstrangeigenfrequenzen usw. eingeteilte werden. Die als Antriebsstrangeigenfrequenzen klassifizierten Frequenzen können dann auf Veränderungen überwacht werden, sowohl was die Frequenzwerte angeht als auch die Amplituden und Modenformen. Das Gleiche kann analog für den Turm umgesetzt werden.

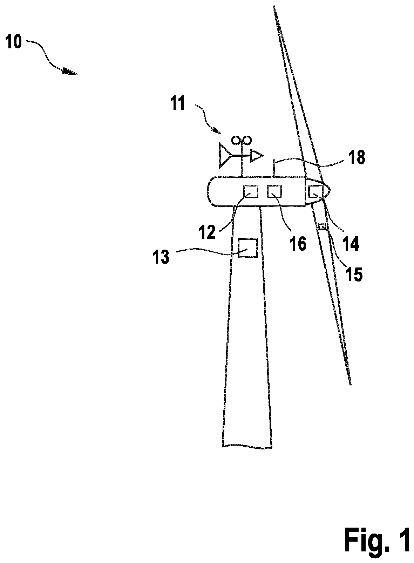

Die Figur 1 zeigt eine beispielhafte Windenergieanlage 10. An der Windenergieanlage 10 gemäß Figur 1 sind beispielhaft mehrere Sensoren 11, 12, 13, 14, 15 angeordnet. Die Sensoren 11, 12, 13, 14 15 können Daten erfassen. Die Daten können relevant hinsichtlich des Betriebs der Windenergieanlage sein. Ferner kann einen Datenverarbeitungsvorrichtung 16 vorgesehen sein. Die Datenverarbeitungsvorrichtung 16 kann die erfassten Daten verarbeiten. Über ein Netzinterface 18 können die verarbeiteten Daten übertragen werden. Insbesondere kann das Netzinterface 18 zum Verbinden der Datenverarbeitungsvorrichtung mit einem Datennetz eingerichtet sein. Das Netzinterface kann eingerichtet sein, um von der Datenverarbeitungsvorrichtung 16 verarbeitete Daten, beispielsweise an einen onlinebasierten Speicher- und Serverdienst, zu senden. Die Datenverarbeitungsvorrichtung 16 kann beispielsweise eine digitale Prozessoreinheit ("DPU") verwenden und/oder sein.

Sensoren 12, 13, 14 15 können Sensoren sein, die Messdaten verschiedenster Parameter zum Beispiel eines Rotors, eines Getriebes, eines Generators und/oder allgemein einer (anderen) Struktur, wie beispielsweise einem Turm, an der Windkraftanlage aufnehmen. An einer Windenergieanlage können einer oder mehrere Sensoren 11, 12, 13, 14 15 angebracht sein. Folglich soll für die vorliegende Offenbarung, sofern nicht explizit anders angegeben, stets von mindestens einem Sensor bzw. einer Kombination von mehreren Sensoren ausgegangen werden, auch wenn für die einfachere Adressierung nur "Sensor" im Singular verwendet wird.

Gemäß hierin beschriebener Ausführungsformen kann also ein Sensor 11, 12, 13, 14, 15 auf der Windenergieanlage angeordnet sein. Der Sensor 11, 12, 13, 14, 15 kann an einem Rotorblatt der Windenergieanlage, an einer Turbine der Windenergieanlage, an einem Getriebe der Windenergieanlage, an einem Turm der Windenergieanlage usw. angeordnet sein oder ein externer Sensor sein.

Beispielsweise kann der Sensor 11, 12, 13, 14, 15 ein optischer Sensor sein. Gemäß hierin beschriebener Ausführungsformen kann der Sensor, 12, 13, 14, 15 ein faseroptischer Sensor sein. Insbesondere kann der Sensor 12, 13, 14, 15 ein faseroptischer Dehnungssensor oder Beschleunigungssensor sein. Der Sensor 12, 13, 14, 15 kann in einer, zwei, drei oder mehr als drei Achsen messen. Der Sensor kann insbesondere ein 2D oder 3D Sensor sein.

Der Sensor 11, 12, 13, 14, 15 kann mit der Datenverarbeitungsvorrichtung 16 verbunden sein. Beispielsweise kann der Sensor 11, 12, 13, 14, 15 über eine drahtgebundenen oder eine drahtlose Verbindung mit der Datenverarbeitungsvorrichtung 16 verbunden sein. Sind der Sensor 11, 12, 13, 14, 15 und die Datenverarbeitungsvorrichtung 16 auf gegeneinander beweglichen Teilen der Windenergieanlage 10 angeordnet, wie beispielsweise dem Rotor und der Gondel, kann eine drahtlose Verbindung von Vorteil sein. Eine drahtlose Verbindung kann beispielsweise über Funk, insbesondere über einen Bluetooth-Standard oder WLAN-Standard, realisiert werden.

Gemäß hierin beschriebener Ausführungsformen kann die Windenergieanlage 10 einen Sensor 15 auf einem Rotorblatt aufweisen. Insbesondere kann je Rotorblatt 15 ein Sensor vorgesehen sein. Die Sensoren 15 können Teil eines Zustandsüberwachungssystems für die Rotorblätter und/oder den Rotor sein. Der Rotor und die Rotorblätter stellen eine mit dem Turm und/oder dem Antriebsstrang mechanisch gekoppelte Struktur dar. Die Datenverarbeitungsvorrichtung 16 kann eine Zustandsüberwachung des Antriebsstrangs oder Turms der Windenergieanlage mittels Daten von dem Zustandsüberwachungssystem der mechanisch gekoppelten Struktur bereitstellen. Insbesondere kann die Datenverarbeitungsvorrichtung 16 Daten eines Zustandsüberwachungssystems erfassen, wobei das Zustandsüberwachungssystem für eine Struktur der Windenergieanlage vorgesehen ist, die mit dem Antriebsstrang oder Turm mechanisch gekoppelt ist. Ferner kann die Datenverarbeitungsvorrichtung 16 eingerichtete sein, die erfassten Daten von dem Zustandsüberwachungssystem, das für die Struktur der Windenergieanlage vorgesehen ist, die mit dem Antriebsstrang oder Turm mechanisch gekoppelt ist zu verarbeiten. Auch kann die Datenverarbeitungsvorrichtung 16 einen Zustand des Antriebsstrangs oder Turms aus den verarbeiteten Daten von dem Zustandsüberwachungssystem bestimmen, das für die Struktur der Windenergieanlage vorgesehen ist, die mit dem Antriebsstrang oder Turm mechanisch gekoppelt ist.

Alternativ oder zusätzlich kann die Datenverarbeitungsvorrichtung 16 die erfassten Daten auch über das Netzinterface 18 senden, so dass die weitere Verarbeitung der Daten nicht (nur) direkt in der Windenergieanlage 10 erfolgt.

Gemäß hierein beschriebener Ausführungsformen kann der mindestens eine Sensor 11, 12, 13, 14, 15 auf mindestens einem Rotorblatt, einem Rotor oder einer Nabe der Windenergieanlage angeordnet sein. Bevorzugt ist der Sensor 15 auf einem Rotorblatt angeordnet. Gemäß hierein beschriebener Ausführungsformen kann der Sensor 11, 12, 13, 14, 15 ein faseroptischer Sensor sein. Gemäß hierein beschriebener Ausführungsformen kann der Sensor 11, 12, 13, 14, 15 ein Vibrationssensor oder Beschleunigungssensor sein. Insbesondere kann der Sensor 11, 12, 13, 14, 15 ein 2D- oder 3D-Beschleunigungssensor sein.

Gemäß hierin beschriebener Ausführungsformen kann die Datenverarbeitungsvorrichtung 16 eingerichtet sein, um Eigenfrequenzen zu bestimmen und/oder eine Veränderung von Eigenfrequenzen zu bestimmen. Insbesondere können die Eigenfrequenzen von den Strukturen, mit denen ein Sensor verbunden ist und/oder an denen ein Sensor befestigt ist sowie von Strukturen, die mit diesen Strukturen mechanisch gekoppelt sein, bestimmt und auf Veränderungen hin überwacht werden. Beispielsweise kann eine Veränderung in einer Amplitude und/oder einer Modenform der Eigenfrequenzen überwacht werden.

Gemäß hierin beschriebener Ausführungsformen kann die Überwachung auch dazu führen, dass eine Abweichung der Windenergieanlage von einem normalen Verhalten bestimmt werden kann. Beispielsweise können die Daten der Sensoren genutzt werden, um festzustellen, ob diese in einem normalen Bereich liegen. Alternativ oder zusätzlich Abweichung der Windenergieanlage von einem normalen Verhalten auch basierend auf den Eigenfrequenzen vorgenommen werden. Insbesondere kann basierend auf den Eigenfrequenzen normale Betriebszustände in Abgrenzung zu abrupten, anormalen Zustände klassifiziert und ein Trendverhalten identifiziert werden.

Gemäß hierin beschriebener Ausführungsformen können Eigenfrequenzen als Antriebsstrangeigenfrequenzen oder Turmeigenfrequenzen klassifiziert und auf Veränderung überwacht werden. Dazu kann insbesondere das Überwachungssystem für eine mechanisch gekoppelte Struktur verwendet werden.

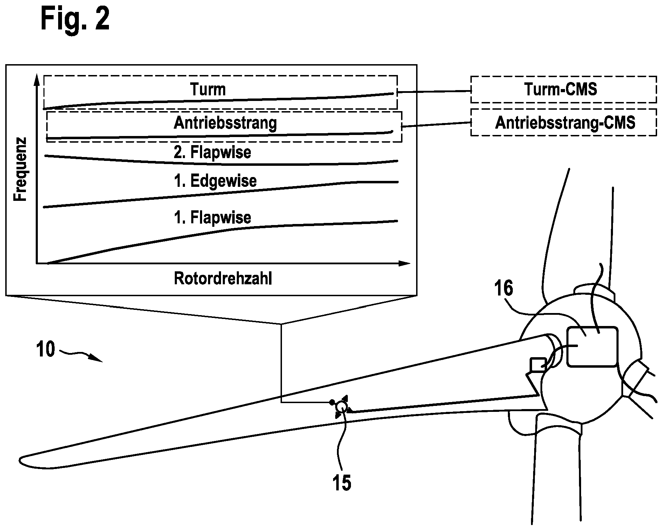

Figur 2 zeigt einen Ausschnitt aus einer beispielhafte Windenergieanlage 10 sowie ein Diagramm zur Darstellung von Eigenfrequenzbereichen gemäß Ausführungsformen.

In der Figur 2 ist beispielhaft der an einem Rotorblatt angeordnete Sensor 15 und die Datenverarbeitungsvorrichtung 16 gezeigt. Zudem zeigt die Figur 2 ein Diagramm zur Veranschaulichung der mit dem Sensor 15 erfassten Frequenzen über die Rotordrehzahl. Das Diagramm zeigt beispielhaft fünf voneinander unterscheidbare Spuren. Die unteren drei Spuren (1. Flapwise, 1. Edgewise, 2. Flapwise) lassen sich dem Rotor bzw. den Rotorblättern zuordnen. Die zweite Spur von oben kann dem Antriebsstrang zugeordnet werden. Die oberste Spur kann dem Turm zugeordnet werden.

Wie die Figur 2 zeigt, können die erfassten Daten eines Zustandsüberwachungssystems einer Struktur auch für die Zustandsüberwachung einer Struktur, die mit dieser mechanisch gekoppelt ist, verwendet werden. Insbesondere zeigt die Figur 2, dass die Daten des Zustandsüberwachungssystems des Rotors eine Zustandsüberwachung des Antriebsstrangs oder Turms erlauben.

Allgemein können die erwarteten Werte für die Eigenfrequenzen von verschiedenen Faktoren abhängen, wie beispielsweise dem Typ und/oder Aufbau der Windenergieanlage 10. Typischerweise können die Turmeigenfrequenzen zwischen der Rotorfrequenz (1P) und der Anregungsfrequenz durch die passierenden Rotorblätter (3P) liegen. Dies kann insbesondere bei einem sogenannten Soft-Tower der Fall sein. In selteneren Fällen werden "Soft-Soft"-Tower verwendet, bei denen die Turmeigenfrequenzen unterhalb der 1P-Rotorfrequenz liegen.

Gemäß hierin beschriebener Ausführungsformen können zur Überwachung der Turmeigenfrequenz Frequenzen im Bereich bis 10 Hz verwendet werden. Insbesondere können Frequenzen in einem Bereich zwischen 0,25 und 2 Hz als Turmeigenfrequenz klassifiziert werden.

Gemäß hierin beschriebener Ausführungsformen können zur Überwachung der Antriebsstrangeigenfrequenz ein oberhalb der Turm- und Rotorblatteigenfrequenzen verwendet werden. Typische Generatordrehzahlen liegen zwischen 900 und 2000 Umdrehungen pro Minute. Daher insbesondere Frequenzen ab 15 Hz (1P des Generators) und deren Vielfache zur Überwachung der Antriebsstrangeigenfrequenz verwendet werden und/oder als Antriebsstrangeigenfrequenz klassifiziert werden.

Gemäß hierin beschriebener Ausführungsformen kann eine Kategorisierung der Eigenfrequenzen durch den Betrag der Frequenz, der Amplitude und/oder des Dämpfungswertes als auch durch Analyse der Modenformen und/oder -richtungen erfolgen. Außerdem kann durch einen Vergleich der gemessenen Eigenfrequenzen zwischen den Blättern eine weitere Kategorisierung durchgeführt werden. Frequenzen die auf allen drei Blättern gleich gemessen werden (selbe Frequenz, Amplitude und Phase), stammen normalerweise nicht von den Blättern selbst, sondern von einer der mechanisch gekoppelten Strukturen. Niedrigere Frequenzen stammen typischerweise eher vom Turm und den Teilen des Antriebsstranges vor dem Getriebe. Höhere Frequenzen stammen typischerweise vom Getriebe und vom Generator.

Gemäß hierin beschriebener Ausführungsformen kann auch eine Frequenzmessung in der Nabe des Rotors erfolgen, beispielsweise durch den Sensor 11, 12, 13, 14, 15. Durch den Vergleich der in der Nabe gemessenen Frequenzen mit den Frequenzen die im Blatt gemessen werden, kann zusätzlich oder alternative eine Kategorisierung gemacht werden.

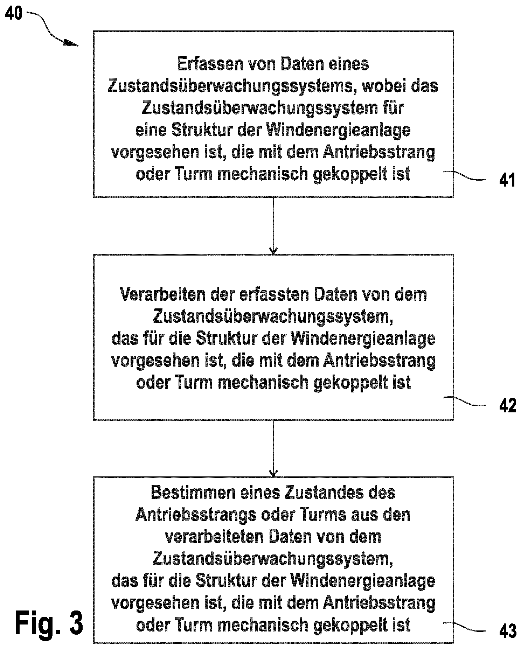

Figur 3 zeigt ein Flussdiagramm zur Veranschaulichung eines Verfahrens 40 zur Zustandsüberwachung eines Antriebsstrangs oder Turms einer Windenergieanlage gemäß Ausführungsformen. Die Windenergieanlage 10 kann dabei beispielsweise die Windenergieanlage 10 aus Figuren 1 und 2 sein.

Gemäß einem Kasten 41 weist das Verfahren ein Erfassen von Daten eines Zustandsüberwachungssystems, wobei das Zustandsüberwachungssystem für eine Struktur der Windenergieanlage 10 vorgesehen ist, die mit dem Antriebsstrang oder Turm mechanisch gekoppelt ist, auf. Insbesondere können die erfassten Daten Vibrationsdaten sein. Gemäß einem Kasten 42, weist das Verfahren ein Verarbeiten der erfassten Daten von dem Zustandsüberwachungssystem, das für die Struktur der Windenergieanlage 10 vorgesehen ist, die mit dem Antriebsstrang oder Turm mechanisch gekoppelt ist, auf. Gemäß einem Kasten 43, weist das Verfahren ein Bestimmen eines Zustandes des Antriebsstrangs oder Turms aus den verarbeiteten Daten von dem Zustandsüberwachungssystem, das für die Struktur der Windenergieanlage 10 vorgesehen ist, die mit dem Antriebsstrang oder Turm mechanisch gekoppelt ist, auf. Es sei an dieser Stelle darauf hingewiesen, dass die hierin beschriebenen Aspekte und Ausführungsformen angemessen miteinander kombinierbar sind, und dass einzelne Aspekte dort weggelassen werden können, wo es im Rahmen des fachmännischen Handelns sinnvoll und möglich ist. Abwandlungen und Ergänzungen der hierin beschriebenen Aspekte sind dem Fachmann geläufig. Der Schutzbereich der Erfindung ist in den Ansprüchen definiert.

## Patentansprüche

1. Verfahren zur Zustandsüberwachung eines Turms einer Windenergieanlage (10), wobei das Verfahren umfasst:
Erfassen von Daten eines Zustandsüberwachungssystems, wobei das Zustandsüberwachungssystem für eine Struktur der Windenergieanlage (10) vorgesehen ist, die mit dem Turm mechanisch gekoppelt ist;
Verarbeiten der erfassten Daten von dem Zustandsüberwachungssystem, das für die Struktur der Windenergieanlage (10) vorgesehen ist, die mit dem Turm mechanisch gekoppelt ist; und
Bestimmen eines Zustandes des Turms aus den verarbeiteten Daten von dem Zustandsüberwachungssystem, das für die Struktur der Windenergieanlage (10) vorgesehen ist, die mit dem Turm mechanisch gekoppelt ist,
**dadurch gekennzeichnet, dass**
die Struktur mindestens ein Rotorblatt, ein Rotor oder eine Nabe der Windenergieanlage (10) ist.

2. Verfahren nach Anspruch 1, wobei das Zustandsüberwachungssystems mindestens einen auf der Struktur angeordneten Sensor (11, 12, 13, 14, 15) aufweist, insbesondere wobei der Sensor (11, 12, 13, 14, 15) ein faseroptischer Sensor ist.

3. Verfahren nach Anspruch 1 oder 2, wobei das Verarbeiten der Daten ein Bestimmen von Eigenfrequenzen aufweist.

4. Verfahren nach Anspruch 3, wobei Eigenfrequenzen als Turmeigenfrequenzen klassifiziert und auf Veränderung überwacht werden.

5. Verfahren nach Anspruch 4, wobei eine Veränderung in einer Amplitude und/oder einer Modenform der Eigenfrequenzen überwacht werden.

6. Verfahren nach einem der vorherigen Ansprüche, wobei die erfassten Daten Vibrationsdaten sind.

7. Windenergieanlage (10), umfassend:
einen Antriebsstrang und einen Turm;
ein Zustandsüberwachungssystem, wobei das Zustandsüberwachungssystem für eine Struktur der Windenergieanlage (10) vorgesehen ist, die mit dem Turm mechanisch gekoppelt ist; und
eine Datenverarbeitungsvorrichtung (16), die eingerichtet ist zum Ausführen des Verfahrens nach einem der vorherigen Ansprüche,
wobei die Struktur mindestens ein Rotorblatt, ein Rotor oder eine Nabe der Windenergieanlage (10) ist.

8. Windenergieanlage nach Anspruch 7, wobei das Zustandsüberwachungssystem mindestens einen auf der Struktur angeordneten Sensor (11, 12, 13, 14, 15) aufweist, insbesondere wobei der Sensor (11, 12, 13, 14, 15) ein faseroptischer Sensor ist.

9. Windenergieanlage nach Anspruch 8, wobei der Sensor ein Vibrationssensor ist.

10. Windenergieanlage nach Anspruch 8 oder 9, wobei der Sensor ein 2D- oder 3D-Beschleunigungssensor ist.

## Claims

1. A method for monitoring the state of a tower of a wind turbine (10), wherein the method comprises:
collecting data of a state monitoring system, wherein the state monitoring system is provided for a structure of the wind turbine (10) which is mechanically coupled to the tower;
processing the collected data of the state monitoring system which is provided for the structure of the wind turbine (10) which is mechanically coupled to the tower; and
determining a state of the tower from the processed data of the state monitoring system which is provided for the structure of the wind turbine (10) which is mechanically coupled to the tower,
**characterized in that** the structure is at least a rotor blade, a rotor, or a hub of the wind turbine (10).

2. The method according to claim 1, wherein the state monitoring system has at least one sensor (11, 12, 13, 14, 15) arranged on the structure, wherein in particular the sensor (11, 12, 13, 14, 15) is a fiber-optical sensor.

3. The method according to claim 1 or 2, wherein processing the data includes determining eigenfrequencies.

4. The method according to claim 3, wherein eigenfrequencies are classified as tower eigenfrequencies and are monitored for changes.

5. The method according to claim 4, wherein a change in an amplitude and/or a mode shape of the eigenfrequencies is monitored.

6. The method according to any one of the preceding claims, wherein the collected data is vibration data.

7. A wind turbine (10), comprising:
a powertrain and a tower;
a state monitoring system, wherein the state monitoring system is provided for a structure of the wind turbine (10) which is mechanically coupled to the tower; and
a data processing device (16) which is adapted to execute the method according to any one of the preceding claims,
wherein the structure is at least a rotor blade, a rotor, or a hub of the wind turbine (10).

8. The wind turbine according to claim 7, wherein the state monitoring system has at least one sensor (11, 12, 13, 14, 15) arranged on the structure, wherein in particular the sensor (11, 12, 13, 14, 15) is a fiber-optical sensor.

9. The wind turbine according to claim 8, wherein the sensor is a vibration sensor.

10. The wind turbine according to claim 8 or 9, wherein the sensor is a 2D or 3D acceleration sensor.

## Revendications

1. Procédé permettant de surveiller l'état d'une tour d'une éolienne (10), le procédé comprenant les étapes consistant à :
détecter des données d'un système de surveillance d'état, dans lequel le système de surveillance d'état est prévu pour une structure de l'éolienne (10) qui est couplée mécaniquement à la tour ;
traiter les données détectées provenant du système de surveillance d'état qui est prévu pour la structure de l'éolienne (10) qui est couplée mécaniquement à la tour ; et
déterminer un état de la tour selon les données traitées provenant du système de surveillance d'état qui est prévu pour la structure de l'éolienne (10) qui est couplée mécaniquement à la tour,
**caractérisé en ce que** la structure est au moins une pale de rotor, un rotor ou un moyeu de l'éolienne (10).

2. Procédé selon la revendication 1, dans lequel le système de surveillance d'état présente au moins un capteur (11, 12, 13, 14, 15) disposé sur la structure, en particulier dans lequel le capteur (11, 12, 13, 14, 15) est un capteur à fibre optique.

3. Procédé selon la revendication 1 ou 2, dans lequel le traitement des données présente une détermination des fréquences propres.

4. Procédé selon la revendication 3, dans lequel des fréquences propres sont classifiées et surveillées quant à une variation.

5. Procédé selon la revendication 4, dans lequel une variation d'une amplitude et/ou d'un système de modes des fréquences propres est surveillée.

6. Procédé selon l'une quelconque des revendications précédentes, dans lequel les données détectées sont des données de vibration.

7. Eolienne (10), comprenant :
une chaîne cinématique et une tour ;
un système de surveillance d'état, dans laquelle le système de surveillance d'état est prévu pour une structure de l'éolienne (10) qui est couplée mécaniquement à la tour ; et
un dispositif de traitement de données (16) qui est conçu pour exécuter le procédé selon l'une quelconque des revendications précédentes,
dans laquelle la structure est au moins une pale de rotor, un rotor ou un moyeu de l'éolienne (10).

8. Eolienne selon la revendication 7, dans laquelle le système de surveillance d'état présente au moins un capteur (11, 12, 13, 14, 15) disposé sur la structure, en particulier dans laquelle le capteur (11, 12, 13, 14, 15) est un capteur à fibre optique.

9. Eolienne selon la revendication 8, dans laquelle le capteur est un capteur de vibrations.

10. Eolienne selon la revendication 8 ou 9, dans laquelle le capteur est un capteur d'accélération 2D ou 3D.
